# EUROPÄISCHE PATENTANMELDUNG

(11) **EP 0 990 504 A1**
(43) Veröffentlichungstag der Anmeldung: **05.04.2000**
(21) Anmeldenummer: 99890304.1
(22) Anmeldetag: 23.09.1999
(51) Int. Cl.: B29C 47/08

(54) **Vorrichtung zum Extrudieren von Kunststoffrohren oder Profilen**

(30) Priorität: 29.09.1998 AT 63398 U
(71) Anmelder: Technoplast Kunststofftechnik Gesellschaft m.b.H., 4563 Micheldorf (AT)
(72) Erfinder: Schwaiger, Meinhard, Dipl.-Ing., 4040 Linz (AT); Mayrhofer, Franz, 4644 Scharnstein (AT)
(74) Vertreter: Babeluk, Michael, Dipl.-Ing. Mag.

(57) **Zusammenfassung**

Die vorliegende Erfindung betrifft eine Vorrichtung zum Extrudieren von Kunststoffrohren oder Profilen mit
- einem Extruder (27), der einen Extruderflansch (26) aufweist;
- einer Extrusionsdüse (29), die einen Düsenflansch (28) aufweist, über den die Extrusionsdüse (29) lösbar mit dem Extruderflansch (26) verbindbar ist;
- einem Befestigungselement (1), das aus zwei Hälften (2, 3) besteht, die dazu ausgebildet sind, den Extruderflansch (26) und den Düsenflansch (28) zu umgreifen;
- einem Spannelement (9), um die beiden Hälften (2, 3) des Befestigungselementes (1) auf die Flansche (26, 28) zu drücken,

Eine verbesserte Funktion kann dadurch erreicht werden daß die beiden Hälften (2, 3) des Befestigungselementes (1) schwenkbar am Extruder (27) befestigt sind und daß sie mechanisch gekoppelt sind, um eine gegenläufige Schwenkbewegung auszuführen.

## Beschreibung

Die vorliegende Erfindung betrifft eine Vorrichtung zum Extrudieren von Kunststoffrohren oder Profilen gemäß dem Oberbegriff von Anspruch 1.

Extrusionsvorrichtungen bestehen aus dem eigentlichen Extruder, in dem ein Kunststoffgranulat (oder -pulver) erwärmt und mit Hilfe von Schnecken gefördert wird. An einem solchen Extruder ist eine Extrusionsdüse angebracht, die die zähflüssige Kunststoffmasse in die gewünschte Querschnittsform bringt. Da für jede Profilform eine eigene Extrusionsdüse erforderlich ist, muß diese leicht und schnell auswechselbar sein. Eine herkömmliche Flanschverbindung, die mit einer Mehrzahl von Schrauben befestigt wird, besitzt den Nachteil, daß das Lösen und das Befestigen einer Extrusionsdüse zeitaufwendig ist. Es sind daher sogenannte Schnellwechselsysteme bekannt geworden, bei denen der Extruderflansch und der Düsenflansch von einem Befestigungselement umgriffen werden, das die beiden Flansche zusammendrückt. Dabei sind an der Rückseite der beiden Flansche kegelförmige Sitzflächen angeordnet, denen zugehörige Sitzflächen am Befestigungselement entsprechen. Auf diese Weise kann durch ein einziges Spannelement, beispielsweise in der Form einer Schraube, ein entsprechender Druck auf die beiden Hälften des Befestigungselements aufgebracht werden, so daß dieses auf die Sitzfläche der beiden Flansche drückt und diese dann zusammenpreßt. Das Befestigen einer Extrusionsdüse kann auf diese Weise erheblich vereinfacht werden. Die Demontage einer Extrusionsdüse ist aber in vielen Fällen nur unter erschwerten Bedingungen möglich. Um entsprechende Anpreßdrücke zwischen den beiden Flanschen erzielen zu können, müssen die Sitzflächen einen relativ flachen Flankenwinkel aufweisen. Dieser beträgt üblicherweise zwischen 10° und 15°. Dies hat zur Folge, daß die beiden Hälften des Befestigungselementes nach dem Lösen des Spannelementes unter Krafteinwirkung von den Flansch getrennt werden müssen. In der Praxis wird dabei mit einem Hammer auf die Befestigungselemente eingeschlagen. Dies führt zu einer unerwünschten Einleitung von Kräften in den Extruder. Außerdem ist die Handhabung der relativ schweren Hälften des Befestigungselements mit einem großen Kraftaufwand verbunden und daher mühsam.

Die US-A 3,632,279 zeigt eine Befestigungsvorrichtung für eine Extrusionsdüse, die zwei Klemmbacken aufweist, die über eine Hebelanordnung gespannt werden können. Bei dieser Vorrichtung ist zwar das Spannen in vorteilhafter Weise möglich, da die Klemmbacken selbstzentrierend sind, aber das Lösen festsitzender Klemmbacken wird nicht wesentlich erleichtert. Insbesonders dann, wenn einer der Klemmbacken festsitzt, während sich der andere löst, trägt die Hebelanordnung nicht dazu bei, auch die festsitzende Klemmbacke freizubekommen, da eine Bewegung des Betätigungshebels direkt auf die bereits gelöste Klemmbacke übersetzt wird. Außerdem ist durch die Hebelanordnung bei der bekannten Lösung die Beweglichkeit der Klemmbacken beschränkt.

Aufgabe der vorliegenden Erfindung ist es, die Rüstzeiten bei der Profilextrusion durch eine Verbesserung des Düsenbefestigungssystems zu verkürzen und die erforderlichen Arbeiten sowohl zu beschleunigen als auch zu erleichtern.

Erfindungsgemäß ist zu diesem Zweck vorgesehen, daß die beiden Hälften des Befestigungselementes schwenkbar am Extruder befestigt sind und daß sie mechanisch gekoppelt sind, um eine zwangsgeführte gegenläufige Schwenkbewegung auszuführen. Wesentlich an der vorliegenden Erfindung ist, daß durch eine mechanische Koppelung der beiden Hälften des Befestigungselements erreicht werden kann, daß das Öffnen einer Hälfte auch das Öffnen der anderen Hälfte bedingt. Das bedeutet, daß die beiden Hälften lediglich auseinandergedrückt werden müssen, um zu erreichen, daß sich beide Hälften von den Flanschen lösen.

Eine besonders einfache Ausführung ergibt sich, wenn als mechanische Koppelung ein Zahnradgetriebe vorgesehen ist. Dabei ist es insbesonders günstig, wenn jede der beiden Hälften des Befestigungselements einstückig mit einem Zahnrad verbunden ist, welche beiden Zahnräder direkt miteinander in Eingriff stehen. Auf diese Weise kommt man konstruktiv ohne zusätzliche Bauteile aus.

Eine besonders günstige Krafteinleitung kann dadurch erreicht werden, daß eine Schraube vorgesehen ist, die dazu ausgebildet ist, die beiden Hälften wahlweise aneinander zu drücken oder auseinander zu drücken. Dies bedeutet weiters, daß ein einziges Spannelement sowohl zur Herstellung als auch zum Lösen der Verbindung der beiden Flansche vorgesehen ist. Eine weitere Verbesserung des Arbeitsablaufs ergibt sich, wenn die Schraube an einer Hälfte des Befestigungselements unverlierbar schwenkbar gehalten ist. Alternativ kann jedoch auch beispielsweise eine pneumatisch arbeitende Öffnungs- und Schließvorrichtung vorgesehen sein.

In einer besonders begünstigten Ausführungsvariante der vorliegenden Erfindung ist vorgesehen, daß die Teilungsebene der beiden Hälften des Befestigungselements im wesentlichen waagrecht angeordnet ist. Besonders günstig ist dabei, wenn die untere Hälfte des Befestigungselements ein größeres Gewicht aufweist als die obere Hälfte des Befestigungselements. Auf diese Weise wird erreicht, daß sich das Gewicht der oberen und der unteren Hälfte des Befestigungselementes annähernd ausgleicht. Bei der Schwenkbewegung muß daher im wesentlichen nur der relativ geringe Reibungswiderstand überwunden werden. Wenn die untere Hälfte etwas schwerer ausgeführt ist als die obere Hälfte, kann erreicht werden, daß die beiden Hälften eine leichte Tendenz aufweisen, sich in den geöffneten Zustand zu bewegen und daß sie ohne Krafteinwirkung in diesem verbleiben.

In der Folge wird die Erfindung anhand der in den Figuren dargestellten Ausführungsbeispielen näher erläutert. Es zeigen:
- Fig. 1: eine Ansicht einer ersten Ausführungsvariante der vorliegenden Erfindung,
- Fig. 2: eine Ansicht entsprechend der Fig. 1 in verriegeltem Zustand in einem verkleinerten Maßstab,
- Fig. 3: eine Draufsicht der Ausführungsvariante von Fig. 1 und 2,
- Fig. 4: eine Ansicht in geöffnetem Zustand,
- Fig. 5: eine weitere Ausführungsvariante der vorliegenden Erfindung und
- Fig. 6: ein Detail einer erfindungsgemäßen Ausführungsvariante im Schnitt.

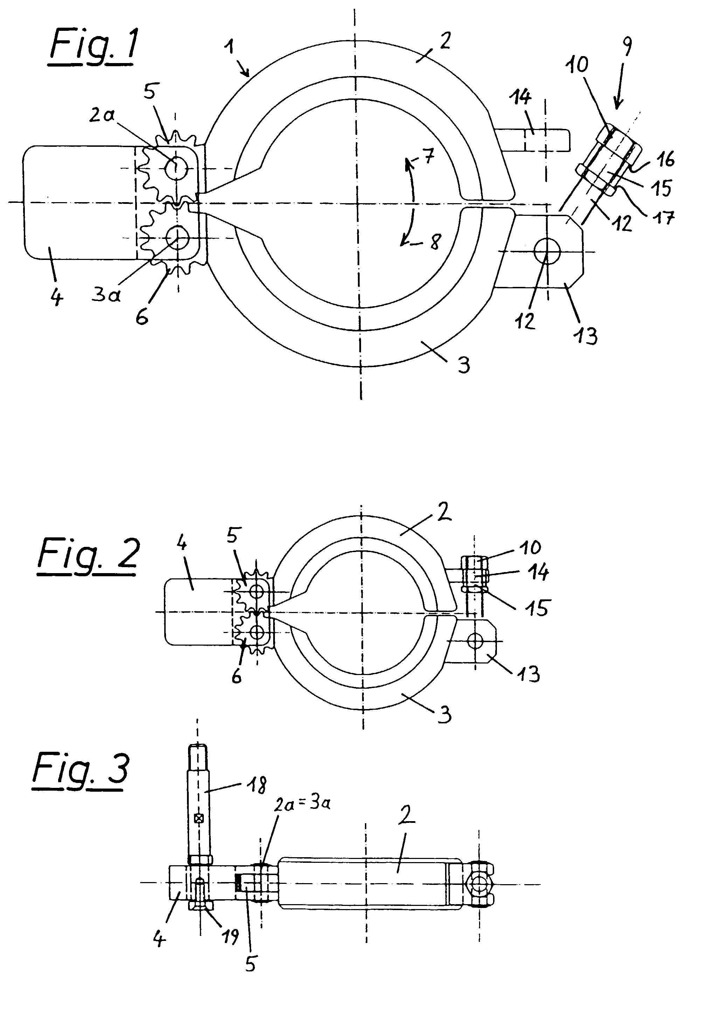

Zur Erhöhung der Klarheit sind in den Fig. 1 bis 5 jeweils nur die Befestigungselemente und Spannelemente dargestellt.

Das Befestigungselement 1 der Fig. 1 besteht aus einer oberen Hälfte 2 und einer unteren Hälfte 3. Die beiden Hälften 2 und 3 sind um Achsen 2a bzw. 3a schwenkbar an einer Halterung 4 angebracht, die mit dem ansonsten in der Fig. 1 nicht dargestellten Extruder verbunden ist. Die beiden Hälften 2, 3 sind im Bereich ihrer Schwenkachsen 2a, 3a einstückig mit Zahnrädern 5, 6 verbunden, die miteinander in Eingriff stehen. Da die Zahnräder 5, 6 gleich groß ausgebildet sind, wird erreicht, daß der Schwenkwinkel der oberen Hälfte 2 in der Richtung des Pfeils 7 nach oben stets dem Schwenkwinkel der unteren Hälfte 3 in der Richtung des Pfeils 8 nach unten entspricht. Ein Spannelement 9 besitzt als wesentliches Element eine Schraube 10, die über einen Schaft 11 um eine Achse 12 schwenkbar an einer Halterung 13 angebracht ist. Die Halterung 13 ist einstückig mit der unteren Hälfte 3 verbunden. Auf diese Weise ist die Schraube 10 unverlierbar mit der unteren Hälfte 3 des Befestigungselements 1 verbunden. An der oberen Hälfte 2 des Befestigungselements 1 ist eine gabelförmige Halterung 14 einstückig zum Eingriff mit der Schraube 10 ausgebildet. Die Schraube 10 besitzt eine Ausnehmung 15 von verringertem Durchmesser, die von einer oberen Druckschulter 16 und einer unteren Druckschulter 17 begrenzt ist.

Die Fig. 2 zeigt den verriegelten Zustand des Befestigungselementes 1. Die Ausnehmung 15 der Schraube 10 ist dabei in die gabelförmige Halterung 14 der oberen Hälfte 2 eingeführt und die Schraube 10 ist angezogen, so daß die obere Druckschulter 16 von oben auf die Halterung 14 drückt. Auf diese Weise werden die beiden Hälften 2, 3 des Befestigungselements 1 zusammengedrückt, um die erforderliche Anpreßkraft zu ergeben. Die untere Druckschulter 17 dient zum Lösen des Befestigungselements 1, indem die beiden Hälften auseinandergedrückt werden. Auch dann, wenn eine der Hälften 2, 3 fester sitzt als die andere, wird durch das aus den Zahnrädern 5, 6 bestehende Getriebe erreicht, daß sich die Hälften 2, 3 gleichmäßig lösen.

In der Fig. 3 ist die Situation in einer Ansicht von oben dargestellt. Ein Befestigungsbolzen 18 stellt die Verbindung der Halterung 4 mit dem ansonsten nicht dargestellten Extruder her. Eine Schraube 19 sichert die Verbindung der Halterung 4 mit dem Befestigungsbolzen 18.

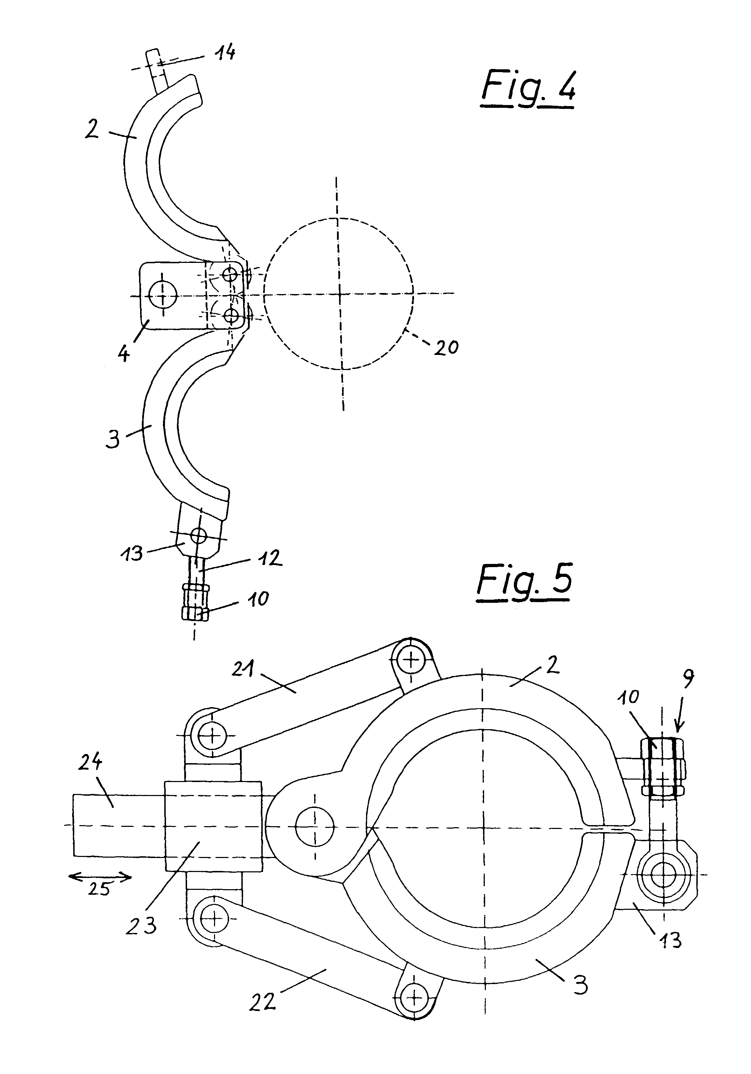

In der Fig. 4 ist die Situation in geöffnetem Zustand dargestellt. Die obere Hälfte 2 ist nach oben weggeschwenkt, während die untere Hälfte 3 nach unten weggeschwenkt ist. Die untere Hälfte 3 ist geringfügig schwerer ausgebildet als die obere Hälfte 2, so daß die in der Fig. 4 gezeigte Lage stabil ist. Der Extruderflansch ist mit 20 mit unterbrochenen Linien angedeutet.

In der Fig. 5 ist eine alternative Ausführungsvariante einer erfindungsgemäßen Vorrichtung dargestellt. Die obere Hälfte 2 und die untere Hälfte 3 des Befestigungselementes 1 und das Spannelement 9 entsprechen im wesentlichen der oben beschriebenen Ausführungsvariante. Unterschiedlich jedoch ist, daß die gegenläufige Bewegung der Hälften 2, 3 nicht durch Zahnräder sondern über Hebel 21, 22 erzielt wird, die gelenkig mit den Hälften 2 bzw. 3 verbunden sind. Weiters sind die Hebel 21, 22 mit einer Schiebehülse 23 verbunden, die auf einer Führung 24 in der Richtung des Doppelpfeiles 25 beweglich gelagert ist. Auf diese Weise können relativ große Kräfte zwischen den beiden Hälften 2 und 3 übertragen werden.

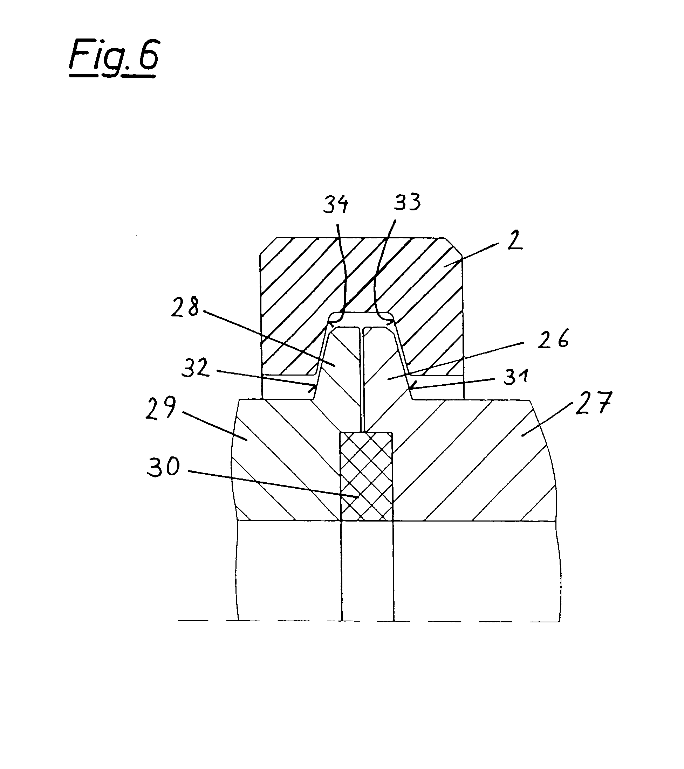

In der Fig. 6 ist ein wesentlicher Abschnitt der erfindungsgemäßen Vorrichtung im Schnitt dargestellt. Ein Extruderflansch 26 ist an einem nur andeutungsweise dargestellten Extruder 27 vorgesehen. An den Extruderflansch 26 schließt ein Düsenflansch 28 einer ebenfalls nur angedeuteten Extrusionsdüse 29 an. Ein Ring 30 bewirkt einerseits die Zentrierung und andererseits die Abdichtung zwischen den Flanschen 26 und 28. Die beiden Flansche 26 und 28 besitzen kegelförmige Sitzflächen 31 und 32. In der Fig. 6 ist die obere Hälfte 2 des Befestigungselementes 1 dargestellt, die einen im wesentlichen U-förmigen Querschnitt aufweist, um die beiden Flansche 26, 28 zu umgreifen. Sitzflächen 33, 34 am Befestigungselement 1 sind dazu ausgebildet, auf die Sitzflächen 31, 32 auf den Flanschen 26 und 28 einen Druck auszuüben, um diese zusammenzudrücken.

Mit der erfindungsgemäßen Vorrichtung ist es möglich, eine Extrusionsdüse schnell und sicher mit einem Extruder zu verbinden und ebenso schnell diese wieder zu lösen. Dabei ist die Gefahr einer Beschädigung von Düse oder Extruder deutlich verringert.

## Patentansprüche

1. Vorrichtung zum Extrudieren von Kunststoffrohren oder Profilen mit
- einem Extruder (27), der einen Extruderflansch (26) aufweist;
- einer Extrusionsdüse (29), die einen Düsenflansch (28) aufweist, über den die Extrusionsdüse (29) lösbar mit dem Extruderflansch (26) verbindbar ist;
- einem Befestigungselement (1), das aus zwei Hälften (2, 3) besteht, die dazu ausgebildet sind, den Extruderflansch (26) und den Düsenflansch (28) zu umgreifen;
- einem Spannelement (9), um die beiden Hälften (2, 3) des Befestigungselementes (1) auf die Flansche (26, 28) zu drücken,
**dadurch gekennzeichnet**, daß die beiden Hälften (2, 3) des Befestigungselementes (1) schwenkbar am Extruder (27) befestigt sind und daß sie mechanisch gekoppelt sind, um eine zwangsgeführte gegenläufige Schwenkbewegung auszuführen.

2. Vorrichtung nach Anspruch 1, **dadurch gekennzeichnet**, daß als mechanische Koppelung ein Zahnradgetriebe vorgesehen ist.

3. Vorrichtung nach Anspruch 2, **dadurch gekennzeichnet**, daß jede der beiden Hälften (2, 3) des Befestigungselements (1) einstückig mit einem Zahnrad (5, 6) verbunden sind, welche beiden Zahnräder (5, 6) direkt miteinander in Eingriff stehen.

4. Vorrichtung nach einem der Ansprüche 1 bis 3, **dadurch gekennzeichnet**, daß als Spannelement (9) eine Schraube (10) vorgesehen ist, die dazu ausgebildet ist, die beiden Hälften (2, 3) wahlweise aneinander zu drücken oder auseinander zu drücken.

5. Vorrichtung nach Anspruch 4, **dadurch gekennzeichnet**, daß die Schraube (10) an einer Hälfte (3) des Befestigungselements (1) unverlierbar schwenkbar gehalten ist.

6. Vorrichtung nach einem der Ansprüche 4 oder 5, **dadurch gekennzeichnet**, daß die Schraube (10) eine obere und eine untere Druckschulter (16, 17) aufweist, zwischen denen eine Ausnehmung (15) gebildet ist, in die eine gabelförmige Halterung (14) eingreifen kann, die an einer Hälfte (2) des Befestigungselementes (1) befestigt ist.

7. Vorrichtung nach einem der Ansprüche 1 bis 6, **dadurch gekennzeichnet**, daß die Teilungsebene der beiden Hälften (2, 3) des Befestigungselements (1) im wesentlichen waagrecht angeordnet ist.

8. Vorrichtung nach Anspruch 7, **dadurch gekennzeichnet**, daß die untere Hälfte (3) des Befestigungselements (1) ein größeres Gewicht aufweist als die obere Hälfte (2) des Befestigungselements (1).
